# EUROPEAN PATENT APPLICATION

(11) **EP 3 650 182 A1**
(43) Date of publication of application: **13.05.2020**
(21) Application number: 18829124.9
(22) Date of filing: 04.07.2018
(51) Int. Cl.: B27D 1/04, B27D 1/06, B27D 1/08

(54) **BOARD CORE OF ARTIFICIAL BOARD AND METHOD FOR MANUFACTURING SAME**

(30) Priority: 05.07.2017 CN 201710542859; 26.04.2018 CN 201810387453
(71) Applicant: Zhenjiang Sunsier Dendro Technology Co., Ltd., Danyang, Jiangsu 212355 (CN)
(72) Inventor: SUN, Yi, Zhenjiang Jiangsu 212355 (CN); CHEN, Hao, Zhenjiang Jiangsu 212355 (CN); WU, Jian, Zhenjiang Jiangsu 212355 (CN)
(74) Representative: Detken, Andreas
(86) International application number: PCT/CN2018/094445
(87) International publication number: WO 2019/007357

(57) **Abstract**

Disclosed is a board core of an artificial board, the board core comprising a plurality of groups of core strip units (5), wherein each of the core strip units has a multi-layer structure in the lengthwise direction of a board core; each of the core strip units comprises multiple substrates; each of the substrates comprises a vertical pressure-bearing body (2) extending in the thickness direction of the board core, a horizontal pressure-bearing body (1) extending in the lengthwise direction of the board core, an oblique pulling structure (3) obliquely arranged with respect to the horizontal pressure-bearing body and the vertical pressure-bearing body, and a dual-horizontal pressure-bearing body (12) extending in the lengthwise direction of the board core; and each of the core strip units is formed by means of sequentially arranging the multiple substrates, and different substrates form different core strip unit structures.

## Description

### FIELD

The present application relates to a board core of an artificial board and a method for manufacturing the same, and belongs to the technical field of wood product processing.

### BACKGROUND

Due to the shortage of wood resources and the high price of solid wood, artificial boards emerge as the times require, and are widely used as board materials for furniture, wooden doors, floors, and building decoration. At present, the most commonly used artificial boards are particle board, fiberboard, plywood, and laminated timber, etc. The artificial board is based on shavings, fibers, and veneer, and is formed by applying adhesive and pressing at high temperature and pressure. The finished board has a high density and a low production cost, but still has some disadvantages: the product is heavy and inconvenient to carry; the structural strength of the finished board is low; the resistance to static bending deformation is poor; and large amount of adhesive is needed, which results in a high formaldehyde content of the product, and does not meet production requirements for environment protection.

In view of this, how to improve the strength of the artificial board, enhance the bearing capacity of the artificial board, and effectively reduce the consumption of wood resources is a technical problem to be urgently solved by those skilled in the art. In Chinese patent CN202021653U, a technology called grid hollow core artificial board is disclosed, which solves the problem of high density and large internal stress of the current artificial board, but also has problems such as a narrow range of raw materials and low structural strength. In Chinese patent CN104070567B, a structural board and a board core thereof, and a method for processing the board core are disclosed. Specifically, a board core of a structural board with large bearing capacity and high structural stiffness and a processing method therefor are disclosed. However, the processing method is not suitable for mechanized operation, is labor-intensive and has low production efficiency.

In Chinese patent CN103659998A, a board material is disclosed, which is formed by bonding multiple board units. Each of the board units is composed of a square wooden board, one side surface or two opposite side surfaces of the square wooden board are provided with grooves at even intervals, and two ends of the grooves extend to adjacent side surfaces. The board material is formed only by cutting grooves on the side surfaces of the square wooden board, and a slab is formed based on the board material. The above structure is relatively simple. When the structure is subjected to complicated external forces, there is no other structure to match the grooving structure, so that the forces cannot be balanced, and the slab has a low strength and is easy to damage.

In Chinese patent CN104070567B, a structural board and a board core thereof, and a method for processing the board core are disclosed. Specifically, a board core of a structural board with large bearing capacity and high structural stiffness and a processing method therefor are disclosed. However, the processing method is not suitable for mechanized operation, is labor-intensive and has low production efficiency.

A fire retardant problem of the artificial board is a difficult problem commonly concerned and urgently to be solved in China and the world. At present, there are two main technical routes for the manufacture of fire-resistant artificial boards in China: one is to process the artificial board with flame retardants, and the other is to compound the artificial board with an inorganic board, but the latter no longer belongs to the field of conventional artificial board products. In Chinese patent CN202021651U, a multifunctional fire-retardant artificial board is disclosed. A technical solution of the patent is to coat upper and lower fire-retardant layers on upper and lower surfaces of a wooden center layer, and cover panels on the upper and lower fire-retardant layers. Although the fire retardant problem of the artificial board is solved, there is still a problem that the strength of the artificial board is low.

### SUMMARY

Based on the disadvantages in the conventional technology, the technical problem to be solved by the present application is to provide a board core of an artificial board which has a high structural strength, is convenient for manufacturing, has high production efficiency, and can further be applied to the field of fire retardant boards.

A board core of an artificial board is provided according to the present application. The board core includes multiple groups of core strip units. Each of the core strip units has a multi-layer structure along a length direction of the board core, and each of the core strip units includes multiple substrates. The multiple substrates include a vertical pressure-bearing body extending in a thickness direction of the board core, a horizontal pressure-bearing body extending in the length direction of the board core, an oblique pulling structure obliquely arranged with respect to the horizontal pressure-bearing body and the vertical pressure-bearing body, and a dual-horizontal pressure-bearing body extending in the length direction of the board core. Each of the core strip units is composed of multiple substrates arranged in sequence, and different substrates constitute different core strip unit structures.

According to the selection of different substrates, a board core of a first artificial board is provided according to the present application. The board core includes multiple groups of core strip units. Each of the core strip units has a multi-layer structure along a length direction of the board core. Each group of the core strip unit includes a vertical pressure-bearing body extending in a thickness direction of the board core, a horizontal pressure-bearing body extending in the length direction of the board core, and an oblique pulling structure obliquely arranged with respect to the horizontal pressure-bearing body and the vertical pressure-bearing body. Each group of the core strip unit is composed of the horizontal pressure-bearing body, the vertical pressure-bearing body, the oblique pulling structure, another oblique pulling structure, another vertical pressure-bearing body, another horizontal pressure-bearing body, another oblique pulling structure and yet another oblique pulling structure laminated and bonded in sequence along the length direction of the board core. The core strip units are laminated and bonded in sequence along the length direction of the board core to form the board core.

Preferably, the vertical pressure-bearing body includes multiple slats which extend along the thickness direction of the board core and are arranged at intervals in parallel with each other; the horizontal pressure-bearing body includes multiple slats which extend along the length direction of the board core and are arranged at intervals in parallel with each other; and the oblique pulling structure includes multiple slats which are obliquely arranged with respect to the horizontal pressure-bearing body and the vertical pressure-bearing body and are arranged at intervals. A projection of the slats at corresponding positions of two adjacent layers of the oblique pulling structures in the core strip unit is in a herringbone shape or a splay shape or a cross shape in the lamination direction of the multi-layer structure.

Preferably, the slat of the oblique pulling structure is inclined at 45 degrees with respect to a surface of the board core.

Preferably, the adjacent oblique pulling structures have a same width in the lamination direction of the multi-layer structure; and the horizontal pressure-bearing body and the vertical pressure-bearing body have a same width in the lamination direction of the multi-layer structure.

Preferably, the slats of the oblique pulling structure are arranged at equal intervals, and the slats of the horizontal pressure-bearing body and the vertical pressure-bearing body are arranged at equal intervals.

Preferably, a bonding point of the slat of the vertical pressure-bearing body at a bonding position between the vertical pressure-bearing body and the horizontal pressure-bearing body is a slope-shaped structure.

Preferably, one layer of the horizontal pressure-bearing body at a boundary of the board core may be removed according to requirements for insertion, so that the boundary of the board core is the vertical pressure-bearing body capable of insertion.

Preferably, the board core further includes a reinforcing rib structure in the length or width direction of the artificial board.

Preferably, a fireproof material used for retarding inflaming is sprayed on surfaces of the horizontal pressure-bearing body, the vertical pressure-bearing body and the oblique pulling structure in the core strip unit, and/or is filled in intervals among the horizontal pressure-bearing body, the vertical pressure-bearing body and the oblique pulling structure.

In order to increase the strength of the board core, a reinforcing rib may added between the oblique pulling structure and the horizontal pressure-bearing body or between the oblique pulling structure and the vertical pressure-bearing body. The reinforcing rib at least includes one layer of thin board or multiple layers of plywood. The reinforcing rib, on the one hand, enhances the strength, and on the other hand, serving as a connecting layer between the oblique pulling structure and the horizontal pressure-bearing body or the vertical pressure-bearing body increases a bonding area, thereby facilitating bonding.

A method for manufacturing the board core of the first artificial board is further provided according to the present application, which includes the following steps:
Step a1: placing multiple slats with a same length and a same thickness in parallel with each other according to fiber grain, and seamlessly placing the slats in a horizontal direction to form a square flat board (1);
Step b1: placing multiple slats having a same length and a same thickness on the flat board (1) with fiber grain thereof perpendicular to the fiber grain of the flat board (1) in a same way as in step a1, and bonding the slats to the flat board (1) to form a square flat board (2);
Step c1: opening multiple grooves which are in parallel with the fiber grain of the slats on two surfaces of the flat board (2) along the fiber grain of the slats to form a board (3);
Step d1: forming a board (4) according to steps a1 to c1, wherein a diagonal length of the board (4) is less than or equal to side lengths of the flat board (1), the flat board (2) and the board (3);
Step e1: cutting the board (4) in a diagonal direction of 45 degrees to form two triangular boards (5);
Step f1: placing four boards (5) on the board (3) with hypotenuses of the four boards (5) coinciding with edges of the board (3), and bonding the four boards to the board (3) to form a board (6);
Step g1: laminating and bonding multiple boards (6) in a certain sequence to form a board (7), and cutting the board (7) according to a certain thickness to form one or more groups of the core strip units; and
Step h1: laminating and bonding the multiple groups of the core strip units in sequence to form the board core of the artificial board.

Preferably, the method further includes step i1: adding a reinforcing rib in the length or width direction of the board core.

Preferably, the side length of the board (3) is 1.2m, and the side length of the board (4) is 0.85m.

Preferably, a depth of each of the grooves on the board (3) is equal to a thickness of the corresponding slat, and a bottom of the groove is a slope-shaped structure.

The advantages of the board core of the artificial board and the method for manufacturing the board core provided by the present application are as follows: the board core has high structural stiffness, there is good mechanical balance inside the core strip units, the board core has strong bearing capacity, and is not easy to distort and deform; the utilization rate of wood is high, and the usage amount of adhesive is small, which is green and environment-friendly; the manufacturing method can be mechanized, the process is simple, and the production efficiency is high; and the board core can be applied to fire retardant artificial boards.

In addition, according to the selection of different substrates, a second slab structure with higher strength is provided according to the present application.

A board core of a second artificial board is provided according to the present application. The board core includes multiple groups of core strip units. Each of the core strip units has a multi-layer structure along a length direction of the board core. Each group of the core strip unit includes a dual-horizontal pressure-bearing body extending in a length direction of the board core, and an oblique pulling structure obliquely arranged with respect to the dual-horizontal pressure-bearing body in the length direction of the board core. Each group of the core strip unit includes the dual-horizontal pressure-bearing body, the oblique pulling structure, and another oblique pulling structure in the length direction of the board core, and is formed by laminating and bonding the dual-horizontal pressure-bearing body, the oblique pulling structure, and another oblique pulling structure.

The dual-horizontal pressure-bearing body is composed of two horizontal pressure-bearing bodies bonded at tail ends.

The core strip units are repeatedly stacked along the length direction of the board core to form the board core.

Preferably, the horizontal pressure-bearing body includes multiple slats which extend along the length direction of the board core and are arranged at intervals and in parallel with each other; and the oblique pulling structure includes multiple slats which are obliquely arranged with respect to the horizontal pressure-bearing body and are arranged at intervals. A projection of the slats at corresponding positions of two adjacent layers of the oblique pulling structures in the core strip unit is in a herringbone shape or a splay shape or a cross shape in the lamination direction of the multi-layer structure.

Preferably, a depth between the slats of the horizontal pressure-bearing body arranged at intervals is smaller than a thickness of the horizontal pressure-bearing body.

Preferably, a depth between the slats of the oblique pulling structure arranged at intervals is smaller than a thickness of the oblique pulling structure.

In order to increase the strength of the board core, a first reinforcing rib is inserted at a tail end of the dual-horizontal pressure-bearing body to bond the slats. Preferably, the first reinforcing rib includes at least includes one layer of thin board or multiple layers of plywood, and the number of layers of the first reinforcing rib can be adjusted according to the width and strength requirements of the board core.

Preferably, since the first reinforcing rib at least includes one layer of thin board, in a case that there is only one layer of thin board, the fiber grain of the thin board is perpendicular to the grain of the horizontal pressure-bearing body bonded with the thin board. In a case that the first reinforcing rib includes multiple layers of thin board, it is required that the fiber grain of the outermost layer of thin board of the first reinforcing rib is perpendicular to the grain of the horizontal pressure-bearing body bonded with the thin board. In a case that the number of multiple layers of thin board included in the first reinforcing rib is odd, it is preferred that the fiber grain of the outermost layer of thin board is perpendicular to the grain of the horizontal pressure-bearing body bonded with the thin board; in addition, the fiber grain of any two adjacent layers of thin board are perpendicular to each other.

In order to increase the strength of the board core, a second reinforcing rib may be provided at a head end of the oblique pulling structure, which is adhered to the oblique pulling structure. The second reinforcing rib at least includes one layer of thin board or multiple layers of plywood. The second reinforcing rib, on the one hand, enhances the strength, and on the other hand, serving as a connecting layer between the oblique pulling structure and the dual-horizontal pressure-bearing body increases a bonding area, thereby facilitating bonding.

Preferably, the slat of the oblique pulling structure is inclined at 45 degrees with respect to a surface of the board core. Preferably, the adjacent oblique pulling structures have a same width in the lamination direction of the multi-layer structure; and the adjacent horizontal pressure-bearing bodies have a same width in the lamination direction of the multi-layer structure. A spacing between any two adjacent slats of the horizontal pressure-bearing body is smaller than a spacing between any two adjacent slats of the oblique pulling structure. Preferably, the slats of the oblique pulling structure are arranged at equal intervals, and the slats of the horizontal pressure-bearing body are arranged at equal intervals. Preferably, a fireproof material used for retarding inflaming is sprayed on surfaces of the horizontal pressure-bearing body, the first reinforcing rib, the second reinforcing rib, a third reinforcing rib, and the oblique pulling structure in the core strip unit, and/or is filled in intervals among the horizontal pressure-bearing body, the first reinforcing rib, the second reinforcing rib, a third reinforcing rib, and the oblique pulling structure.

In order to increase the strength of the board core, the oblique pulling structure and another adjacent oblique pulling structure may be interrupted at any position, and a third reinforcing rib may be inserted at the interrupted position. A direction of the third reinforcing rib is parallel or not parallel to the length direction of the board core. In a case that multiple third reinforcing ribs are inserted, the third reinforcing ribs are used as edges to form a grid structure, and the strength of the board core is improved overall.

Preferably, the board core further includes a fourth reinforcing rib structure in the length or width direction of the artificial board.

A method for manufacturing the board core of the second artificial board is further provided according to the present application, which includes the following steps:
Step a2: placing multiple slats with a same length and a same thickness in parallel with each other according to fiber grain, and seamlessly placing the slats in a horizontal direction to form a square flat board (11);
Step b2: stacking two identical boards (11) into a square flat board (12) with directions of the fiber grain of the two boards being the same;
   In a case that it is required to enhance strength of the board, a first reinforcing rib may be provided between the two boards (11), and the fiber grain of the first reinforcing rib is perpendicular to the fiber grain of the board (11) when being connected with the board (11).
Step c2: opening multiple grooves which are in parallel with the fiber grain of the board (12) on two surfaces of the flat board (12) along the fiber grain of the board to form a board (13);
Step d2: placing multiple slats with a same length and a same thickness in parallel with each other according to the fiber grain, and seamlessly placing the slats in a horizontal direction to form a square flat board (11); stacking two identical boards (11) into a square flat board with directions of the fiber grain of the two boards perpendicular to each other; and opening multiple grooves which are in parallel with the fiber grain of the square flat board on two surfaces of the square flat board along the fiber grain of the square flat board to form a board (14), wherein a diagonal length of the board (14) is less than or equal to side lengths of the flat board (11), the flat board (12) and the board (13);
Step e2: cutting the board (14) in a diagonal direction of 45 degrees to form two triangular boards (15);
Step f2: placing four boards (15) on the board (13) with hypotenuses of the four boards (15) coinciding with edges of the board (13), and bonding the four boards to the board (13) to form a board (16);
   In a case that it is required to enhance strength of the board and to increase a bonding area between the dual-horizontal pressure-bearing body and the oblique pulling structure, a second reinforcing rib may be provided between the board (13) and the board (15).
Step g2: cutting the board (16) according to a certain thickness to form one or more groups of the core strip units, and laminating and bonding the multiple groups of the core strip units in sequence to form the board core of the artificial board.

Preferably, the side length of the board (13) is 1.2m, and the side length of the board (14) is 0.85m. Preferably, a depth of each of the grooves on the board (13) is smaller than a thickness of the corresponding slat. Preferably, in order to increase the strength of the board core, the method further includes step h2: inserting, after the step a2 and before the step b2, a first reinforcing rib, wherein the fiber grain of an outermost layer of thin board of the first reinforcing rib is perpendicular to the board (11). Preferably, in order to increase the strength of the board core, the method further includes step i2: inserting, after the step c2 and before the step d2, a second reinforcing rib. Preferably, if the strength of the board core needs to be further increased, the method may further include step j2: inserting, after the step f2 and before the step g2, a third reinforcing rib, wherein a specific process is as follows: opening grooves at different positions on a surface of the board (16) along the length or width direction of the board core, and filling corresponding slats in the grooves to form multiple third reinforcing ribs, wherein a depth of each groove is less than or equal to the thickness of the board (14).

In order to increase the fire resistance of the board core of the artificial board, a fireproof material used for retarding inflaming may be sprayed on surfaces of the horizontal pressure-bearing body, and the oblique pulling structure in the core strip unit, and/or may be filled in intervals among the horizontal pressure-bearing body, and the oblique pulling structure.

The advantages of the board core of the second artificial board and the method for manufacturing the board core provided by the present application are as follows:
(1) Compared with the vertical pressure-bearing body structure in the conventional technology, there is no vertical pressure-bearing body in the structure of the second artificial board of the present application. The artificial board core is used for manufacturing various objects. In this case, corresponding components such as a door handle, a load-bearing member, and a hook need to be fastened through fasteners such as bolts, nails, and pins at connections or other positions. The size of the wooden board is cut according to the site conditions. In a case that the fastening position is exactly the position of the vertical pressure-bearing body, since the inside of the vertical pressure-bearing body is a structure with multiple empty grooves, a contact area between an axial direction of the fastener and the vertical pressure-bearing body is very small when the fastener is inserted into the vertical pressure-bearing body, which will result in that the fastening force is too small to fix the object, and the structure of the vertical pressure-bearing body may be damaged in severe cases. While this problem can be avoided by adopting the dual-horizontal pressure-bearing body. The slab structure of the present application includes the dual-horizontal pressure-bearing body and the oblique pulling structure. No matter where the fastening position is selected, the axial direction can make good contact with the horizontal pressure-bearing body or the oblique pulling structure when the fastener is inserted into the wooden board, which increases the fastening force and has a better fastening effect.
(2) Since there is no vertical pressure-bearing body in the structure of the second artificial board of the present application, compared with the conventional technology, it is not necessary to rotate the slab by 90 degrees when performing the grooving process. Referring to steps a2 to c2, only two boards (11) need to be stacked, and there is no need to rotate 90 degrees, and the grooving process can be performed directly on the machine. The present application saves the process of rotating the slab by 90 degrees, on the one hand saving labor costs, on the other hand, greatly improving the production efficiency.
(3) The board core composed of the dual-horizontal pressure-bearing body, the oblique pulling structure, and another oblique pulling structure has high structural stiffness, there is good mechanical balance inside the core strip units, the board core has strong bearing capacity, and is not easy to distort and deform. the utilization rate of wood is high, and the usage amount of adhesive is small, which is green and environment-friendly. the manufacturing method can be mechanized, the process is simple, and the production efficiency is high.
(4) The presence of the first reinforcing rib is conducive to improving the strength of the board core and reducing the deflection of the board core, thereby reducing the deformation rate. Since the wood grain of the reinforcing rib is perpendicular to the grain of the horizontal pressure-bearing body, in a case that the board is subjected to a strong external pressure, the horizontal pressure-bearing body is prone to bending deformation under pressure, while the grain of the rib is perpendicular to the external pressure , the rib is not prone to bending deformation, and on the contrary supports the bending deformation of the horizontal pressure-bearing body, which enhances the strength of the board core, and reduces the deformation rate of the board core due to heat and damp. On the other hand, since the board core is a combination of the dual-horizontal pressure-bearing body and two oblique pulling structures, it is difficult to obtain a whole board with a large size according to the existing process size. Generally, a height dimension of a door panel is greater than 2m, while according to the existing process, the longest size of a whole board of the dual-horizontal pressure-bearing body and the oblique pulling structure can only reach 1.2m. If the board needs to reach the size of 2m, it is necessary to splice two boards, which will cause the longitudinal compressive strength of the board core to decrease. If there is the first reinforcing rib in the board, a whole reinforcing rib with a length of 2m, 2.2m, 2.4m, or other dimensions can be used to increase the longitudinal compressive strength of the board core. In addition, the presence of the first reinforcing rib is conducive to increasing the bonding area between the board core and the panel, making the final board more solid and difficult to fall apart. Since the board core is not the final product, upper and lower panels need to be bonded to the board core to form the final product. If there is the first reinforcing rib in the board, the bonding area is increased, which makes the bonding of the final board more solid, and the board difficult to fall apart.
(5) The presence of the second reinforcing rib is conducive to improving the strength of the board core. In addition, the presence of the second reinforcing rib is conducive to increasing the bonding area between the board core and the panel, making the final board more solid and difficult to fall apart. Since the board core is not the final product, upper and lower panels need to be bonded to the board core to form the final product. If there is the second reinforcing rib in the board, the bonding area is increased, which makes the bonding of the final board more solid, and the board difficult to fall apart.
(6) The presence of the third reinforcing rib is conducive to improving the strength of the board core. If multiple third reinforcing ribs are inserted, the third reinforcing ribs are used as edges to form a grid structure, which can increase the bearing capacity along the length direction of the board core, and further increase the bending and compressive strength of the slab, thereby improving the overall strength of the board core.
(7) Since the board core is coated with fire-resistant materials, plus the special structure of the board core, the board core has a better flame retardant effect. the board core can be applied to fire retardant artificial boards.

### BRIEF DESCRIPTION OF THE DRAWINGS

The drawings below only schematically illustrate and explain the present application, rather than limit the scope of the present application.
Figure 1 is a schematic structural view of a core strip unit according to an embodiment of the present application;
Figure 2 is a schematic structural view of a board core according to an embodiment of the present application;
Figure 3 is a schematic structural view of slats of a horizontal pressure-bearing body, a vertical pressure-bearing body and an oblique pulling structure according to an embodiment of the present application;
Figure 4 is a schematic structural view of the slats at corresponding positions of two adjacent layers of the oblique pulling structures according to an embodiment of the present application;
Figure 5 is a schematic structural view of a board core capable of insertion according to an embodiment of the present application;
Figure 6 is a schematic view of a bonding structure of the horizontal pressure-bearing body and the vertical pressure-bearing body according to an embodiment of the present application;
Figure 7 is a schematic structural view of a board (1) in an embodiment of a method for manufacturing the board core according to the present application;
Figure 8 is a schematic structural view of a board (2) in an embodiment of a method for manufacturing the board core according to the present application;
Figure 9 is a schematic structural view of a board (3) in an embodiment of the method for manufacturing the board core according to the present application;
Figure 10 is a schematic view showing a cutting direction of a board (4) and the structure of a board (5) in an embodiment of the method for the manufacturing the board core according to the present application;
Figure 11 is a schematic structural view of a board (6) in an embodiment of the method for manufacturing the board core according to the present application;
Figure 12 is a schematic structural view of a board (6) in an embodiment of the method for manufacturing the board core according to the present application;
Figure 13 is a schematic structural view of a board (7) in an embodiment of a method for manufacturing the board core according to the present application;
Figure 14 is a schematic structural view of grooves in an embodiment of the method for manufacturing the board core according to the present application;
Figure 15 is a schematic structural view of a reinforcing rib in an embodiment of the board core according to the present application;
Figure 16 shows a perspective view and a front view of the core strip unit according to an embodiment of the present application, wherein Figure 16a is the schematic perspective view, and Figure 16b is the front view;
Figure 17 is a schematic view of the horizontal pressure-bearing body in the structure of the board core according to an embodiment of the present application, wherein Figure 17a is a front view of the horizontal pressure-bearing body, and Figure 17b is a projection view of the horizontal pressure-bearing body in a direction A;
Figure 18 is a schematic view of the oblique pulling structure in the structure of the board core according to an embodiment of the present application, wherein Figure 18a is a front view of the oblique pulling structure (20) and the oblique pulling structure (21), Figure 18b is a projection view of the oblique pulling structure (20) in a direction B, and Figure 18c is a projection view of the oblique pulling structure (21) in a direction C;
Figure 19 is a schematic perspective view of an artificial board core in an embodiment according to the present application, wherein Figure 19a is a perspective view of the artificial board core, and Figure 19b is a front view of the artificial board core;

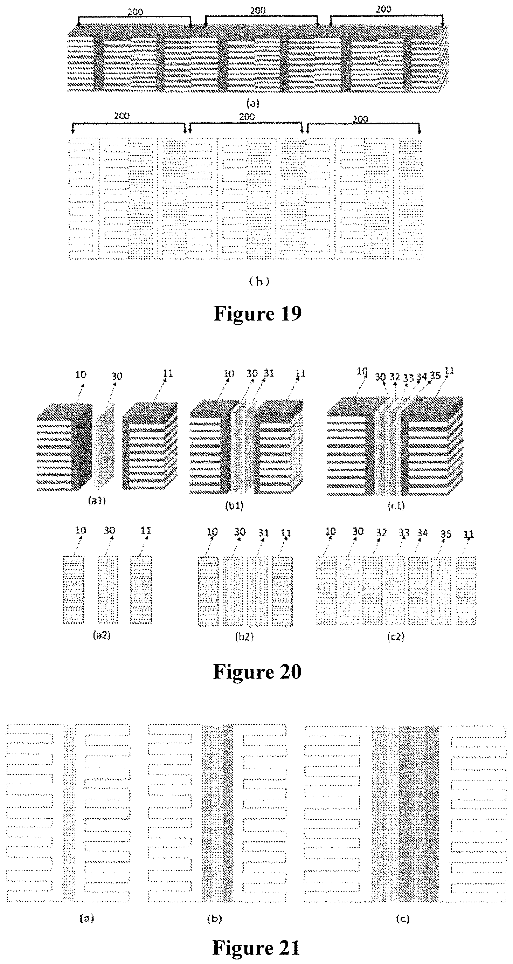

Figure 20 shows schematic structural views of embodiments including a first reinforcing rib according to the present application, wherein Figure 20a1 is a schematic perspective view of the first reinforcing rib including one layer of a thin board; Figure 20a2 shows that the thin board of the first reinforcing rib is perpendicular to fiber grain of the horizontal pressure-bearing body; Figure 20b1 is a schematic perspective view of the first reinforcing rib including two layers of thin board; Figure 20b2 shows that the thin boards of the first reinforcing rib are perpendicular to the fiber grain of the horizontal pressure-bearing body; Figure 20c1 is a schematic perspective view of the first reinforcing rib including five layers of thin board; and Figure 20c2 shows that the thin boards of the first reinforcing rib are perpendicular to the fiber grain of the horizontal pressure-bearing body;
Figure 21 shows front views of structures including the first reinforcing rib according to embodiments of the present application, wherein Figure 21a is a schematic front view of the first reinforcing rib including one layer of thin board; Figure 21b is a schematic front view of the first reinforcing rib including three layers of thin board; and Figure 21c is a schematic front view of the first reinforcing rib including five layers of thin board;

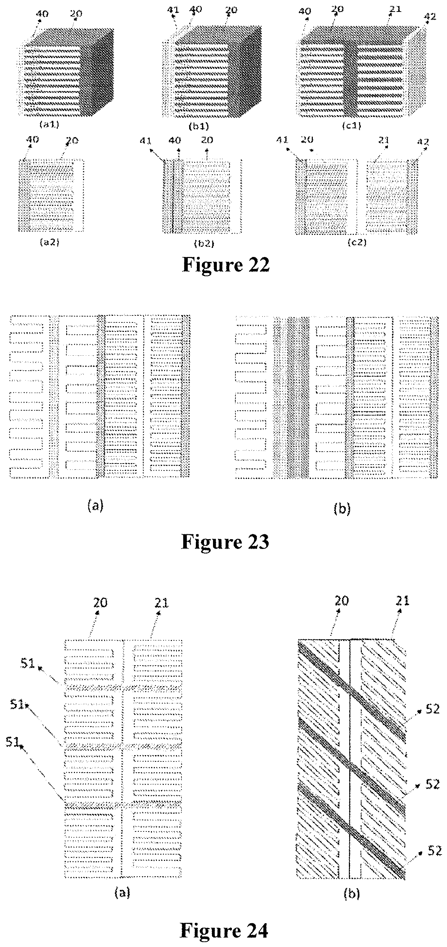

Figure 22 shows schematic structural views of embodiments including a second reinforcing rib according to the present application, wherein Figure 22a1 is a schematic perspective view of the second reinforcing rib including one layer of thin board; Figure 22a2 is a schematic plan view of the second reinforcing rib including one layer of thin board; Figure 22b1 is a schematic perspective view of the second reinforcing rib including two layers of thin board; Figure 22b2 is a schematic plan view of the second reinforcing rib including two layers of thin board; Figure 22c1 is a schematic perspective view of the oblique pulling structure (20) and the oblique pulling structure (21) including the second reinforcing rib; and Figure 22c2 is a schematic front view of the oblique pulling structure (20) and the oblique pulling structure (21) including the second reinforcing rib;
Figure 23 shows front views of core strip units including the first reinforcing rib and the second reinforcing rib according to embodiments of the present application, wherein Figure 23a is a front view of an embodiment including the first reinforcing rib; and Figure 23b is a front view of an embodiment including the first reinforcing rib and the second reinforcing rib;
Figure 24 shows front views of embodiments including a third reinforcing rib according to the present application, wherein Figure 24a is a front view of the oblique pulling structure including the third reinforcing rib, and the reinforcing rib is in parallel with the board core; and Figure 24b is a front view of the oblique pulling structure including the third reinforcing rib, and the reinforcing rib is inclined with respect to the board core;
Figure 25 is schematic structural view of the artificial board core in an embodiment according to the present application, wherein the figure shows that the board core of the artificial board includes multiple third reinforcing ribs which form a grid structure;
Figure 26 shows schematic structural views of the slats at corresponding positions of two adjacent layers of the oblique pulling structures according to an embodiment of the present application, wherein Figure 26a is a herringbone shape, Figure 26b is a cross shape, and Figure 26c is a splay shape;
Figure 27 shows schematic structural views of a board (11) in an embodiment of the method for manufacturing the board core according to the present application, wherein Figure 27a is a schematic plan view of a board surface, and Figure 27b is a schematic plan view of the Figure 27a in a direction D;
Figure 28 shows schematic structural views of a board (12) in an embodiment of the method for manufacturing the board core according to the present application, wherein Figure 28a is a schematic plan view of the board surface, and Figure 28b is a schematic plan view of the Figure 28a in the direction D;
Figure 29a shows schematic structural views of a board (13) in an embodiment of the method for manufacturing the board core according to the present application, wherein a-1 is a schematic plan view of the board, and a-2 is a side view of the board; and
Figure 29b shows schematic structural views of a board (14) in an embodiment of the method for manufacturing the board core according to the present application, wherein b-1 is a schematic plan view of the board, and b-2 is a side view of the board;
Figures 30a and 30b show cutting directions of the board (14) in the embodiment of the method for manufacturing the board core according to the present application, and Figures 30c and 30d are schematic structural views of a board (15);
Figure 31 shows schematic structural views of a board (16) in an embodiment of the method for manufacturing the board core according to the present application, wherein a-1 is a schematic plan view of the board, and a-2 is a side view of the board;
Figure 32 is a schematic structural view of the board core composed of the core strip units in an embodiment of the method for manufacturing the board core according to the present application;
Figure 33 shows schematic views of the board (13) including the first reinforcing rib in an embodiment of the method for manufacturing the board core according to the present application, wherein Figure 33a is a plan view of the board, and Figure 33b is a side view of the board;
Figure 34 shows schematic views of the board (16) including the second reinforcing rib in an embodiment of the method for manufacturing the board core according to the present application, wherein Figure 34a is a plan view of the board, and Figure 34b is a side view of the board; and
Figure 35 shows schematic views of the board (16) including the third reinforcing rib in an embodiment of the method for manufacturing the board core according to the present application, wherein Figure 35a is a plan view of the board, and Figure 35b is a side view of the board.

**Reference Numerals:**

| | |
|---|---|
| 1: horizontal pressure-bearing body, | 2: vertical pressure-bearing body, |
| 3: oblique pulling structure , | 4: slat, |
| 5: core strip unit, | 6: reinforcing rib, |
| 10: horizontal pressure-bearing body, | 11: horizontal pressure-bearing body, |
| 12: dual-horizontal pressure-bearing body, | 20: oblique pulling structure, |
| 21: oblique pulling structure, | 22: dual-oblique pulling structure, |
| L1: thickness of the horizontal pressure-bearing body, | |
| L2: groove depth of the grooved horizontal pressure-bearing body, | |
| L3: thickness of the oblique pulling structure, | |
| L4: groove depth of the grooved oblique pulling structure, | |
| 200: core strip unit, | 30: thin board, |
| 31: thin board, | 32: thin board, |
| 33: thin board, | 34: thin board, |
| 35: thin board, | 40: thin board, |
| 41: thin board, | 42: thin board, |
| 51: third reinforcing rib parallel to the board core, | |
| 52: third reinforcing rib inclined with respect to the board core. | |

### DETAILED DESCRIPTION OF THE EMBODIMENTS

In order to provide a clearer understanding of the technical features, objects, and effects of the present application, specific embodiments of the present application will be described with reference to the drawings, in which the same reference numerals represent the same parts. In order to make the drawings simple, the drawings only schematically show parts related to the present application, which does not represent the actual structure of the product. In addition, in order to make the drawings simple and easy to understand, only one of the components with the same structure or function is schematically illustrated in some of the drawings, or only one of the components with the same structure or function is marked.

In this specification, the term "schematic" means "serving as an example, instance, or illustration". Any drawing or embodiment described as "schematic" should not be construed as a more preferred or more advantageous technical solution.

Compared with the conventional technology, the board core of the artificial board provided by the present application includes multiple groups of core strip units, and each of the core strip units has a multi-layer structure along the length direction or width direction of the board core, so that there is good mechanical balance inside the core strip units, thereby effectively improving the structural strength and bearing capacity of the artificial board, and effectively reducing the bending deformation of the board in application.

### First embodiment:

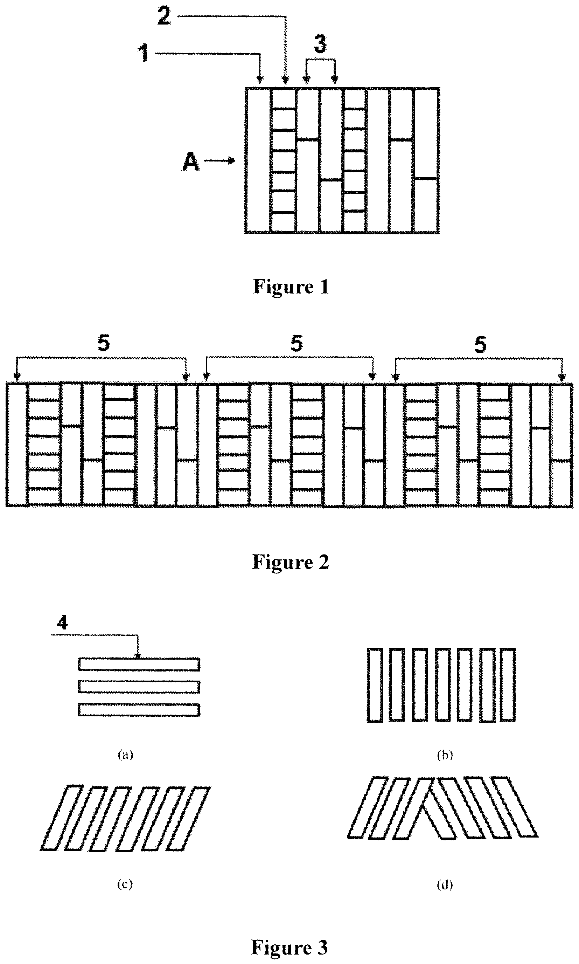

Specifically, the board core of the artificial board according to the present application includes multiple groups of core strip units. Figure 1 is a schematic structural view of the core strip unit according to the present application, and is a plan view of a surface of the board core. Each of the core strip units has a multi-layer structure along the length direction of the board core, and along the length direction of the board core each group of the core strip unit includes a vertical pressure-bearing body extending in a thickness direction of the board core, a horizontal pressure-bearing body extending in the length direction of the board core, and an oblique pulling structure obliquely arranged with respect to the horizontal pressure-bearing body and the vertical pressure-bearing body. The horizontal pressure-bearing body includes multiple slats which extend along the length direction of the board core and are arranged at intervals and in parallel with each other; the vertical pressure-bearing body includes multiple slats which extend along the thickness direction of the board core and are arranged at intervals and in parallel with each other; and the oblique pulling structure is inclined with respect to the horizontal pressure-bearing body and the vertical pressure-bearing body, and includes multiple slats which are obliquely arranged with respect to the horizontal pressure-bearing body and the vertical pressure-bearing body and are arranged at intervals. each group of the core strip unit is composed of the horizontal pressure-bearing body, the vertical pressure-bearing body, the oblique pulling structure, another oblique pulling structure, another vertical pressure-bearing body, another horizontal pressure-bearing body, another oblique pulling structure and yet another oblique pulling structure laminated and bonded in sequence along the length direction of the board core, forming a structure of eight layers. The core strip units are laminated in sequence along the length direction of the board core to form the board core of the artificial board.

It should be noted that, in the present embodiment, the shape and composition of the horizontal pressure-bearing body, the vertical pressure-bearing body, and the oblique pulling structure are not limited to the slats in this solution, and may be other non-slat structures such as board block, board sheet, or integrated board, as long as the structural composition can meet the requirements of the vertical pressure-bearing body extending along the thickness direction of the board core, the horizontal pressure-bearing body extending along the length direction of the board core, and the oblique pulling structure being obliquely arranged with respect to the horizontal pressure-bearing body and the vertical pressure-bearing body.

Figure 2 is a schematic structural view of the board core according to an embodiment of the present application, and is a plan view of the surface of the board core. As shown in the figure, the board core is composed of three groups of core strip units which are sequentially laminated and bonded in a sequence that the horizontal pressure-bearing body of the next group of the core strip unit is bonded to the oblique pulling structure of the previous group of the core strip unit. In a specific embodiment, the number of core strip units in the board core is determined according to the length or width of the artificial board. A repeating manner of the core strip units in the board core depends on the specific application of the board. The present embodiment is only an example.

It should be noted that, the above "length direction of board core" may be the width direction of the board core in a specific embodiment. It should be understood that, in the present application, a direction in which the horizontal pressure-bearing body, the vertical pressure-bearing body, and the oblique pulling structure are laminated to form the core strip unit is the same as a direction in which the core strip units are laminated to form the board core.

In the core strip unit of the present application, the horizontal pressure-bearing body and the vertical-pressure bearing body function as a frame, which is capable of withstanding the tension and pressure applied to the artificial board. Due to the combination of the oblique pulling structure and the frame, the external forces applied to the artificial board can be effectively decomposed. In addition, the core strip unit of the present application has symmetrical vertical pressure-bearing bodies and horizontal pressure-bearing bodies on the left and right edges of the two layers of oblique pulling structures, so that there is good mechanical balance inside the core strip unit, and the board core is not prone to deformation.

In a specific embodiment, a spacing between the slats of the horizontal pressure-bearing body and the vertical pressure-bearing body in the core strip unit is adjusted according to the processing technology and the practical application of the board. The spacing between adjacent slats may not be fixed. Preferably, the slats of the horizontal pressure-bearing body and the vertical pressure-bearing body are arranged at equal intervals.

Figure 3 (a) and Figure 3 (b) are the horizontal pressure-bearing body and the vertical-pressure bearing body in the core strip unit shown in Figure 1 in a direction A, respectively. The horizontal pressure-bearing body and the vertical-pressure bearing body are both composed of slats parallel to each other. The slats of the horizontal pressure-bearing body extend along the length direction of the board core, the slats of the vertical pressure-bearing body extend along the thickness direction of the board core, and the horizontal pressure-bearing body and the vertical-pressure bearing body can function as a frame and provide protection for the board core to withstand external forces.

In a specific embodiment, a spacing between the slats of the oblique pulling structure in the core strip unit is adjusted according to the processing technology and the practical application of the board. The slats in a same oblique pulling structure may be parallel to each other, and the spacing between adjacent slats may not be fixed. Inclination directions and angles of the slats in the same layer of the oblique pulling structure with respect to the surface of the board core may be the same or different. Preferably, the slanting angle of the slats in the same layer of the oblique pulling structure with respect to the surface of the board core is the same, preferably 45 degrees. Preferably, the slat spacing of the horizontal pressure-bearing body and the vertical pressure-bearing body is smaller than the slat spacing of the oblique pulling structure, which is conducive to increasing the bonding area and improving the stability of the board core.

Figure 3(c) and Figure 3(d) show a layer of the oblique pulling structure in the core strip unit shown in Figure 1 in the direction A. The oblique pulling structure includes multiple slats obliquely arranged at intervals with respect to the horizontal pressure-bearing body and the vertical pressure-bearing body. All slats in the oblique pulling structure shown in Figure 3(c) have a same inclination direction with respect to the surface of the board core. Inclination directions of the slats in the oblique pulling structure shown in Figure 3(d) with respect to the surface of the board core are different. Regardless of whether the inclination directions of the slats in the same layer of the oblique pulling structure are the same or opposite, the embodiment falls within the protection scope of the present application, as long as the slats of the oblique pulling structure are obliquely arranged at intervals with respect to the horizontal pressure-bearing body and the vertical pressure-bearing body.

Further, in order to achieve a better mechanics effect, in a specific embodiment, the horizontal pressure-bearing body in the core strip unit has a same width along the lamination direction as the vertical pressure-bearing body in the core strip unit, and the adjacent oblique pulling structures have a same width along the lamination direction. Preferably, the horizontal pressure-bearing body, the vertical pressure-bearing body, and the oblique pulling structure have a same width along the lamination direction.

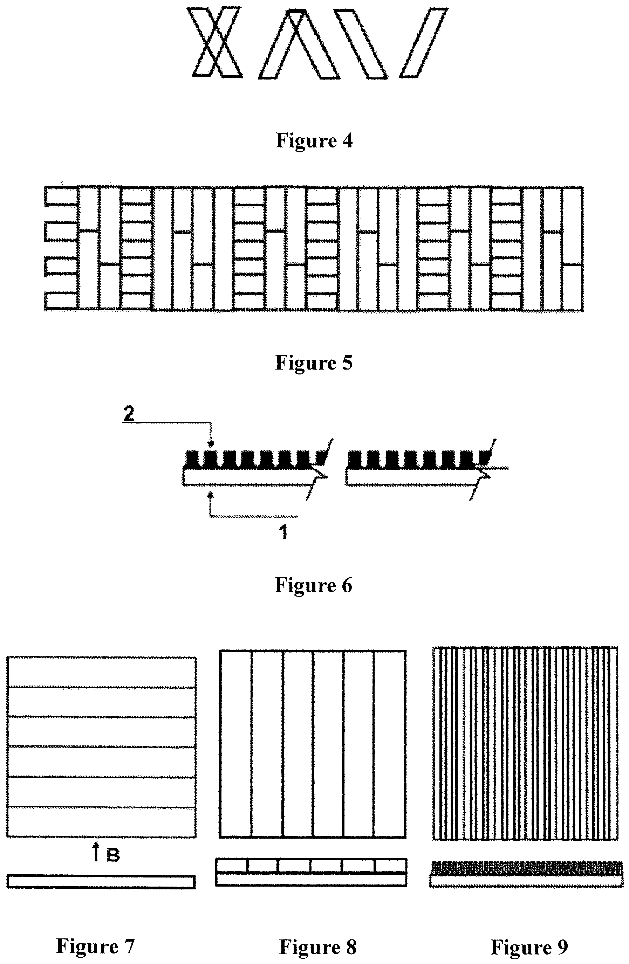

Each group of the core strip unit according to the present application includes two groups of double adjacent layers of oblique pulling structures. In a specific embodiment, due to the difference in the spacing, inclination directions and angles of slats in the oblique pulling structure, a projection of the slats at corresponding positions of two adjacent layers of the oblique pulling structures is in a herringbone shape or a splay shape or a cross shape in the lamination direction, as shown in Figure 4. Figure 4 is a schematic view of the projections of the slats of two adjacent layers of the oblique pulling structures in the lamination direction.

It should be noted that, the inclination directions and distribution manners of the slats of the two adjacent layers of the oblique pulling structures in each group of the core strip unit in the board core may not be constant.

Further, in order to improve the bonding strength of adjacent horizontal pressure-bearing body and vertical pressure-bearing body in the core strip unit and increase the bonding area, a bonding point of the slat of the vertical pressure-bearing body at a bonding position between the vertical pressure-bearing body and the horizontal pressure-bearing body is a slope-shaped structure. The slope-shaped structure may be a straight slope or a curved slope, as shown in Figure 6. In a specific embodiment, the bonding point of the slat of the vertical pressure-bearing body may be other forms of increasing the bonding area.

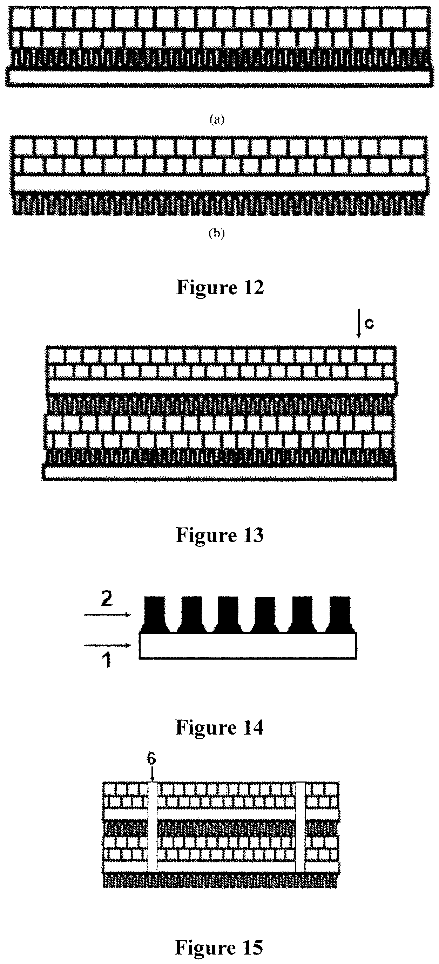

In a specific embodiment, if it is required to further increase the structural strength of the board core, reinforcing ribs may be added along the length direction or width direction of the board core, as shown in Figure 15.

In a specific embodiment, a fireproof material used for retarding inflaming may be sprayed on surfaces of the horizontal pressure-bearing body, the vertical pressure-bearing body and the oblique pulling structure in the core strip unit, and/or is filled in intervals among the horizontal pressure-bearing body, the vertical pressure-bearing body and the oblique pulling structure.

In a specific embodiment, one layer of the horizontal pressure-bearing body at a boundary of the board core according to the present application may be removed, so that the boundary of the board core is the exposed vertical pressure-bearing body. Figure 5 is a structural view of the board core, and is a plan view of the surface of the board core. Since the vertical pressure-bearing body includes multiple slats which extend along the thickness direction of the board core and are arranged at intervals and in parallel with each other, the vertical pressure-bearing body at the trimmed boundary of the board core is a natural insertion structure. In a case that the board core needs to be connected by insertion to increase the size or strength or the like of the artificial board, the board core according to the present application can save a complex embossing process and facilitate insertion.

### Second embodiment:

A method for manufacturing a board core of an artificial board is further provided according to the present application. The board core includes multiple groups of core strip units. Each of the core strip units has a multi-layer structure along a length direction of the board core. Each group of the core strip unit includes a vertical pressure-bearing body extending in a thickness direction of the board core, a horizontal pressure-bearing body extending in the length direction of the board core, and an oblique pulling structure obliquely arranged with respect to the horizontal pressure-bearing body and the vertical pressure-bearing body. Each group of the core strip unit is composed of the horizontal pressure-bearing body, the vertical pressure-bearing body, the oblique pulling structure, another oblique pulling structure, another vertical pressure-bearing body, another horizontal pressure-bearing body, another oblique pulling structure and yet another oblique pulling structure laminated and bonded in sequence along the length direction of the board core. The core strip units are laminated and bonded in sequence along the length direction of the board core to form the board core. Specific steps are as follows:
Step a1, placing multiple slats with a same length and a same thickness in parallel with each other according to fiber grain, and seamlessly placing the slats in a horizontal direction to form a square flat board (1);
   Figure 7 shows a schematic plan view of a surface of the board (1) and a side view of the board in a direction B. It should be noted that, there is no requirement for the width of each slat in specific embodiments, and preferably the slats have the same width. The length and thickness of the slats are selected according to the conditions of the raw materials and the application of the board. The slats are packed tightly and seamlessly, as shown in Figure 7.
Step b1: placing multiple slats having a same length and a same thickness on the flat board (1) with fiber grain thereof perpendicular to the fiber grain of the flat board (1) in a same way as in step a1, and bonding the slats to the flat board (1) to form a square flat board (2);
   Figure 8 shows a schematic plan view of a surface of the board (2) and a side view of the board in the direction B as shown in Figure 7. Multiple slats having the same length and the same thickness are seamlessly placed on the board (1). There is no requirement for the width of each slat in specific embodiments, and preferably the slats have the same width. The length and thickness of the slats are selected according to the conditions of the raw materials and the application of the board. It should be noted that, the fiber grain of each slat in the board (2) is perpendicular to the fiber grain of each slat in the board (1). In order to save wood, the length of each slat in the board (2) is preferably the same as the length of the slat in the board (1), while the thickness and width thereof may be the same as or different from those of the slat in the board (1). After the slats are arranged in place, the slats are bonded to the flat board (1) to form the board (2), and the board (1) has a same side length as the board (2).
Step c1: opening multiple grooves which are in parallel with the fiber grain of the slats on two surfaces of the flat board (2) along the fiber grain of the slats to form a board (3);
   Figure 9 shows a schematic plan view of a surface of the board (3) and a side view of the board in the direction B as shown in Figure 7. The board (3) is formed by grooving on two surfaces of the board (2) along the fiber grain, wherein a direction of the grooves is parallel to the fiber grain. The depth and width of the grooves and the number of the grooves are determined according to the application and the strength requirements of the board core. Preferably, the depth of each of the grooves on the board (3) is equal to a thickness of the corresponding slat, and a bottom of the groove is a slope-shaped structure, as shown in Figure 14. The slope-shaped structure can increase the bonding area between the slats, which helps to improve the stability of the board core. The slope structure may be a straight slope structure or a curved slope structure. In specific embodiments, the structure may be other structures of increasing the bonding area.
Step d1: forming a board (4) according to steps a1 to c1, wherein a diagonal length of the board (4) is less than or equal to side lengths of the flat board (1), the flat board (2) and the board (3);
   The structure view of the board (4) is the same as the board (3). It should be noted that, the depth, width, and number of the grooves in the board (4) may be the same as those of the board (3), or may be completely different from those of the board (3), as long as the diagonal length of the board (4) is less than or equal to that of the board (3). The board (4) and the board (3) are manufactured in a same way.
Step e1: cutting the board (4) in a diagonal direction of 45 degrees to form two triangular boards (5);

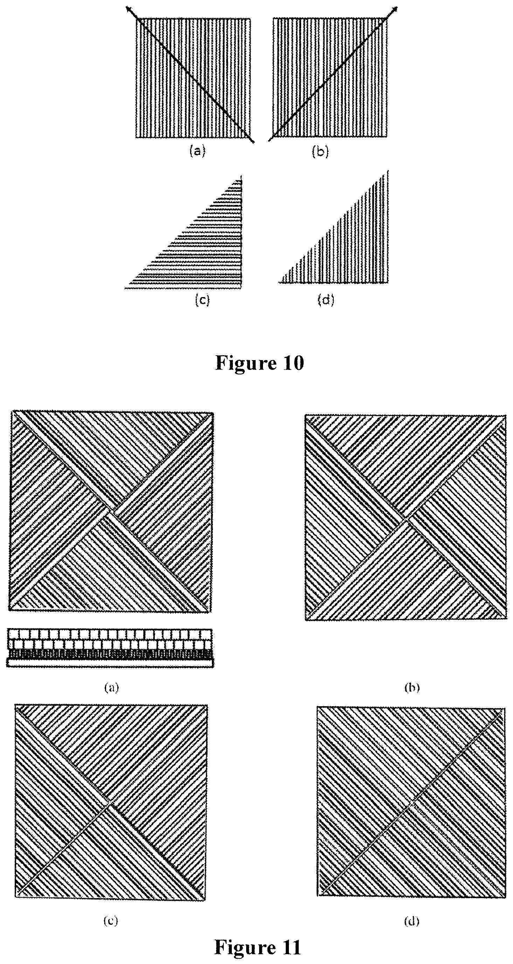

   Figures 10(a) and 10(b) are schematic views of cutting directions of the board (4). There are two ways to cut the same board (4) in the diagonal direction of 45 degrees, and the formed board (5) also has two structural forms, as shown in Figures 10(c) and 10(d). It should be noted that, both cutting directions are applicable to the method for manufacturing the board core according to the present application, and fall within the protection scope of the present application.
Step f1: placing four boards (5) on the board (3) with hypotenuses of the four boards (5) coinciding with edges of the board (3), and bonding the four boards to the board (3) to form a board (6);
   Figure 11 is a schematic view of the board (6). Since the board (5) of two structures is formed by cutting the board (4) in different ways, different cutting methods and different selection of the board (5) lead to four variants of the structure of the board (6). The formed board (6) has a structure as shown in Figures 11(a) and 11(b), if four boards (5) formed by cutting two boards (4) in a same direction are adopted; and the formed board (6) has a structure as shown in Figures 11(c) and 11(d), if four boards (5) formed by cutting two boards (4) in two different directions are adopted. In addition, since the four boards (5) may be arranged on either side of the surface of the board (3), the structure of the board (6) has two variants as shown in Figures 12(a) and 12(b). All the various variants of the board (6) fall within the protection scope of the present application. It should be noted that, if the hypotenuse of the board (5), that is, the diagonal length of the board (4) is shorter than the side length of the board (3), the hypotenuse of the board (5) coincides with an edge of the board (3), in this case, there may be a gap in a center of the board. However, the gap does not affect the manufacture of the board core according to the present application.
Step g1: laminating and bonding multiple boards (6) in a certain sequence to form a board (7), and cutting the board (7) according to a certain thickness to form one or more groups of the core strip units (8);
   In a specific embodiment, a lower surface of the board (6) shown in Figure 12(b) is laminated and bonded to an upper surface of the board (6) shown in Figure 12(a) to form the board (7), as shown in Figure 13. The orientation terms "upper" and "lower" refer to the top and bottom of Figures 12(a) and 12(b), and the up-down direction refers to a direction perpendicular to the board surface. It should be understood that these orientation terms are described with the drawings of the specification as reference, and these terms should not affect the protection scope of the present application.
   It should be noted that, the board (7) shown in Figure 13 only includes one group of eight-layer structure, that is, a group of core strip unit. In practical applications, multiple boards (6) may be combined according to requirements for the length and width of the board core to form the board (7) having multiple groups of core strip units, and then the board (7) is cut according to the direction C shown in Figure 13 and according to a certain thickness.
Step h1: laminating and bonding the multiple groups of the core strip units (8) in a certain sequence to form the board core of the artificial board.

The core strip units prepared according to the above steps are laminated and bonded in sequence along the length or width direction of the board core, thereby forming the board core of the artificial board having a certain length and width.

In a specific embodiment, the side length of the board (3) is 1.2m, and the side length of the board (4) is 0.85m.

In a specific embodiment, if the strength of the board core needs to be further increased, the manufacturing method may further include step i1: adding a reinforcing rib in the length or width direction of the board core, as shown in Figure 15.

### Third embodiment:

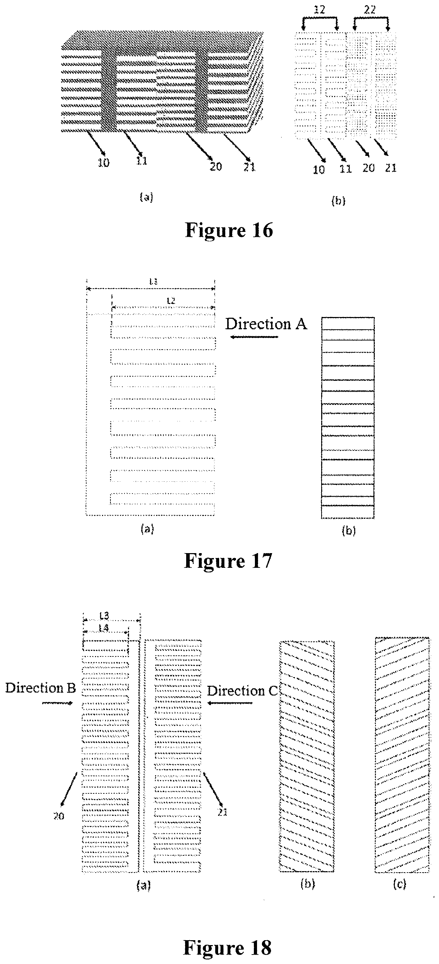

Specifically, the board core of a second artificial board according to the present application includes multiple groups of core strip units. Figures 16a and 16b are schematic structural views of the core strip unit according to the present application, and respectively are a perspective view and a front view of the board core of the artificial board. Each of the core strip units has a multi-layer structure along the length direction of the board core, and along the length direction of the board core each group of the core strip unit includes a horizontal pressure-bearing body (10) and a horizontal pressure-bearing body (11) extending in the length direction of the board core, and an oblique pulling structure (20) and an oblique pulling structure (21) obliquely arranged with respect to the horizontal pressure-bearing bodies.

Figure 17a is a front view of the horizontal pressure-bearing body, and Figure 17b is a projection view of the horizontal pressure-bearing body in the direction A. The horizontal pressure-bearing body includes multiple slats which extend along the length direction of the board core and are arranged at intervals and in parallel with each other, that is, the horizontal pressure-bearing body is grooved. A spacing depth L2 (that is, a depth of the groove) of the slat is smaller than a thickness L1 of the horizontal pressure-bearing body (Figure 17a). The fiber grain of the horizontal pressure-bearing body is parallel to the groove (Figure 17b). Herein, a grooved side of the horizontal pressure-bearing body is defined as a head end, and another ungrooved side of the horizontal pressure-bearing body is defined as a tail end, as shown in Figure 17a. Referring to Figure 17b, a dual-horizontal pressure-bearing body (12) is composed of the horizontal pressure-bearing body (10) and the horizontal pressure-bearing body (11) laminated and bonded at tail ends.

Figure 18a is a front view of the oblique pulling structure, Figure 18b is a projection of the oblique pulling structure in the direction B, and Figure 18c is a projection of the oblique pulling structure in the direction C, where the oblique pulling structure includes multiple slats which extend along the length direction of the board core and are arranged at intervals and in parallel with each other, that is, the oblique pulling structure is grooved. A spacing depth L3 of the slat is smaller than a thickness L4 of the oblique pulling structure. The fiber grain of the oblique pulling structure is parallel to the groove. Herein, a grooved side of the oblique pulling structure is defined as a head end, and another ungrooved side of the oblique pulling structure is defined as a tail end. The oblique pulling structure is obliquely arranged with respect to the horizontal pressure-bearing body. The oblique pulling structure includes multiple slats obliquely arranged at intervals with respect to the horizontal pressure-bearing body. Figure 18b is a projection view of the oblique pulling structure in the direction B, and Figure 18c is a projection view of the oblique pulling structure in the direction C. As shown in the figures, the grooves of the two oblique pulling structures are inclined with respect to the grooves of the horizontal pressure-bearing body.

Each group of the core strip unit is composed of the horizontal pressure-bearing body (10), the horizontal pressure-bearing body (11), the oblique pulling structure (20) and the oblique pulling structure (21) laminated and bonded in sequence along the length direction of the board core, forming a structure of four layers, wherein the tail end of the horizontal pressure-bearing body (10) is laminated with the tail end of the horizontal pressure-bearing body (11), and is laminated with the head end of the oblique pulling structure (20), and the tail end of the oblique pulling structure (20) is laminated with the tail end of the oblique pulling structure (21), thereby forming the core strip unit (200), as shown in Figure 19. The core strip units are laminated and bonded in sequence along the length direction of the board core to form the board core of the artificial board, as shown in Figure 19. Figure 19 illustrates the board core of the artificial board composed of three core strip units (200), Figure 19a is a perspective view of the board core of the artificial board, and Figure 19b is a front view of the board core of the artificial board. The board core shown in Figure 19 is composed of three groups of core strip units which are sequentially laminated and bonded in a sequence that the horizontal pressure-bearing body of the next group of the core strip unit is bonded to the oblique pulling structure of the previous group of the core strip unit. In a specific embodiment, the number of core strip units in the board core is determined according to the length or width of the artificial board. A repeating manner of the core strip units in the board core depends on the specific application of the board. The present embodiment is only an example.

Specifically, it should be noted that, the dual-horizontal pressure-bearing body shown in Figure 18a is only a schematic view, and the front view may be a view viewed from an oblique angle, and may not be a view viewed from a vertical direction.

### Fourth embodiment:

Specifically, the tail end of the horizontal pressure-bearing body (10) is connected with the tail end of the horizontal pressure-bearing body (11) to form the dual-horizontal pressure-bearing body. In order to increase the strength, a first reinforcing rib may be inserted between the tail end of the horizontal pressure-bearing body (10) and the tail end of the horizontal pressure-bearing body (11), and the first reinforcing rib includes at least one layer of thin board. The number and thickness of the thin board may be increased or decreased as required. For example, the first reinforcing rib may include one layer to N layers of thin board (N is an integer greater than 1), as shown in Figures 20a1, 20a2, 20b1, 20b2, 20c1 and 20c2. Figure 20a1 shows that the reinforcing rib included is one layer of thin board (30), and the one layer of thin board (30) is inserted between the tail end of the horizontal pressure-bearing body (10) and the tail end of the horizontal pressure-bearing body (11). It is required that the fiber grain of the thin board (30) is perpendicular to the fiber grain of surfaces of tail ends of the horizontal pressure-bearing bodies (10) and (11). Referring to Figure 20a2, it can be seen from the Figure 20a2 that the thin board (30) is perpendicular to the fiber grain of surfaces of tail ends of the horizontal pressure-bearing bodies (10) and (11). Figure 20b1 shows that the reinforcing rib included is two layers of thin board, and the two layers of thin board (30) and (31) are inserted between the tail end of the horizontal pressure-bearing body (10) and the tail end of the horizontal pressure-bearing body (11). It is required that the fiber grain of the thin boards (30) and (31) is perpendicular to the fiber grain of surfaces of tail ends of the horizontal pressure-bearing bodies (10) and (11). Referring to Figure 20b2, it can be seen from the Figure 20b2 that the thin boards (30) and (31) are perpendicular to the fiber grain of surfaces of tail ends of the horizontal pressure-bearing bodies (10) and (11). Figure 20c1 shows that the reinforcing rib included is five layers of thin board, and the five layers of thin board (30), (32), (33), (34) and (35) are inserted between the tail end of the horizontal pressure-bearing body (10) and the tail end of the horizontal pressure-bearing body (11). It is required that the fiber grain of the thin boards (30) and (35) is perpendicular to the fiber grain of surfaces of tail ends of the horizontal pressure-bearing bodies (10) and (11). Referring to Figure 20c2, it can be seen from the Figure 20c2 that the thin boards (30) and (35) are perpendicular to the fiber grain of surfaces of tail ends of the horizontal pressure-bearing bodies (10) and (11). The fiber grain of any two adjacent layers of the five thin boards (30), (32), (33), (34) and (35) are perpendicular to each other.

Each group of the core strip unit is composed of the horizontal pressure-bearing body (10), the first reinforcing rib, the horizontal pressure-bearing body (11), the oblique pulling structure (20), and the oblique pulling structure (21) laminated and bonded in sequence along the length direction of the board core. Referring to Figure 21, Figure 21a is a schematic front view of the dual-horizontal pressure-bearing body having the first reinforcing rib including one layer of thin board; Figure 21b is a schematic front view of the dual-horizontal pressure-bearing body having the first reinforcing rib including three layers of thin board; and Figure 21c is a schematic front view of the dual-horizontal pressure-bearing body having the first reinforcing rib including five layers of thin board.

It should be noted that, in all embodiments of the present application, it is required that the fiber grain of the thin board of the first reinforcing rib laminated with the tail end of the horizontal pressure-bearing body is perpendicular to the fiber grain of the horizontal pressure-bearing body, and an orientation of the fiber grain of the thin board of the first reinforcing rib not directly laminated with the tail end of the horizontal pressure-bearing body may be determined according to specific conditions. In a case that the number of layers of thin board included in the first reinforcing rib is odd, the fiber grain of the thin board in contact with the horizontal pressure-bearing body is perpendicular to the horizontal pressure-bearing body.

### Fifth embodiment:

Specifically, a second reinforcing rib is inserted at a connection between the dual-horizontal pressure-bearing body and the oblique pulling structure, which serves as a connection layer of the dual-horizontal pressure-bearing body and the oblique pulling structure. The second reinforcing rib includes at least one layer of thin board, and the specific number of layers and the thickness of the thin board may be increased or decreased according to the practical conditions, as shown in Figure 22. Figure 22a1 is a perspective view of the second reinforcing rib including one layer of thin board, and Figure 22a2 is a front view of the second reinforcing rib including one layer of thin board. The thin board (40) is laminated with the head end of the oblique pulling structure (20). Figure 22a1 is a perspective view of the second reinforcing rib including one layer of thin board, and Figure 22a2 is a front view of the second reinforcing rib including one layer of thin board. The thin board (40) is laminated with the head end of the oblique pulling structure (20). Figure 22b1 is a perspective view of the second reinforcing rib including two layers of thin board, and Figure 22a2 is a front view of the second reinforcing rib including two layers of thin board. A second layer of thin board (41) is laminated with a first layer of thin board (40), and the first layer of thin board (40) is laminated with the head end of the oblique pulling structure (20). Figure 22c1 is a perspective view of the oblique pulling structure having the second reinforcing rib including one layer of thin board, and Figure 22c2 is a front view of the oblique pulling structure having the second reinforcing rib including one layer of thin board. Each head end of the oblique pulling structures (20) and (21) is bonded with the second reinforcing rib including one layer of thin board (41).

Each group of the core strip unit is composed of the horizontal pressure-bearing body (10), the first reinforcing rib, the horizontal pressure-bearing body (11), the second reinforcing rib, the oblique pulling structure (20), and the oblique pulling structure (21), and the second reinforcing rib laminated and bonded in sequence along the length direction of the board core. Figure 8 shows front views of board cores including the first reinforcing rib and the second reinforcing rib, wherein Figure 23a is a front view of the board core of the artificial board including the first reinforcing rib having one layer of thin board and the second reinforcing rib having one layer of thin board; and Figure 23b is a front view of the board core of the artificial board including the first reinforcing rib having three layers of thin board and the second reinforcing rib having one layer of thin board.

### Sixth embodiment:

Specifically, when the oblique pulling structure (20) is laminated with the oblique pulling structure (21), in order to increase the strength of the board core in the length direction, the oblique pulling structure (20) and the oblique pulling structure (21) may be interrupted and grooved at any position, and a third reinforcing rib may be filled in the groove. Referring to Figure 24, a direction of the third reinforcing rib is parallel or not parallel to the length direction of the board core. As shown in Figure 24a, the direction of the third reinforcing rib is parallel to the length of the board core, the two oblique pulling structures are interrupted at multiple positions to form grooves, and the grooves after the interruption are filled with the third reinforcing ribs (51). The third rib is the slat. Figure 24b shows that the direction of the third reinforcing rib is inclined with respect to the length direction of the board core, and the direction of the groove of the oblique pulling structure is inclined with respect to the length direction of the core of the board.

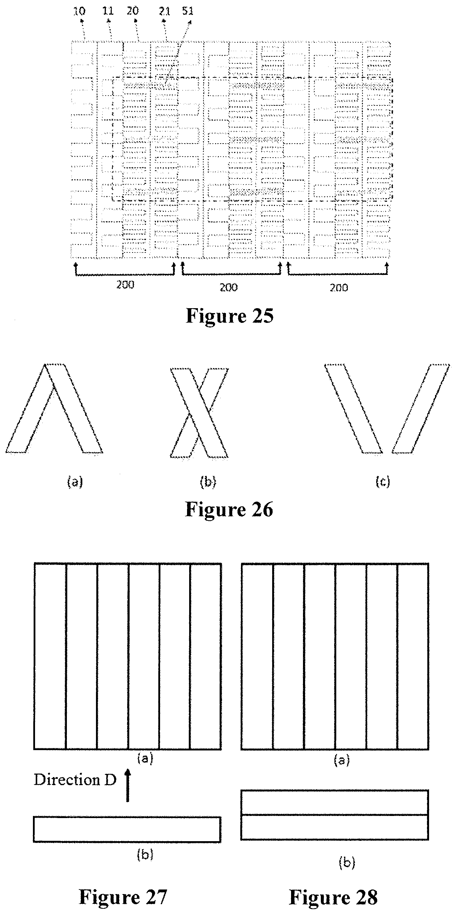

Referring to Figure 25, each group of the core strip unit is composed of the horizontal pressure-bearing body (10), the horizontal pressure-bearing body (11), the oblique pulling structure (20), and the oblique pulling structure (21) laminated and bonded in sequence along the length direction of the board core, and the oblique pulling structure (20) and the oblique pulling structure (21) are provided with multiple third reinforcing ribs (51), thereby forming the core strip unit (200). Referring to Figure 25, the board core includes three groups of core strip units. It can be seen from Figure 25 that, multiple groups of third reinforcing ribs arranged on the oblique pulling structures form multiple grids. Referring to the dotted frame portion in Figure 25, these third reinforcing ribs constitute a grid structure. The grid structure, on the one hand, can disperse the forces and make these forces quickly reach equilibrium when the board core is subjected to external forces. On the other hand, the multiple third reinforcing ribs form a mutually supporting structure, which further increases the strength of the board core in the horizontal direction and further reduces the deformation rate of the board core.

It should be noted that, in the embodiments according to the present application, the shape and composition of the horizontal pressure-bearing body, and the oblique pulling structure are not limited to the slats in this solution, and may be other non-slat structures such as board block, board sheet, or integrated board, as long as the structural composition can meet the requirements of the horizontal pressure-bearing body extending along the length direction of the board core, and the oblique pulling structure being obliquely arranged with respect to the horizontal pressure-bearing body.

In a specific embodiment according to the present application, the number of core strip units in the board core is determined according to the length or width of the artificial board. A repeating manner of the core strip units in the board core depends on the specific application of the board. The present embodiment is only an example.

It should be noted that, the above "length direction of board core" may be the width direction of the board core in a specific embodiment. It should be understood that, in the present application, a direction in which the horizontal pressure-bearing body and the oblique pulling structure are laminated to form the core strip unit is the same as a direction in which the core strip units are laminated to form the board core.

In the core strip unit of the present application, the dual-horizontal pressure-bearing body function as a frame, which is capable of withstanding the tension and pressure applied to the artificial board. Due to the combination of the oblique pulling structure and the frame, the external forces applied to the artificial board can be effectively decomposed.

In a specific embodiment, the spacing between the slats of the horizontal pressure-bearing body in the core strip unit is adjusted according to the processing technology and the practical application of the board. The spacing between adjacent slats may not be fixed. Preferably, the slats of the horizontal pressure-bearing body are arranged at equal intervals.

In a specific embodiment, a spacing between the slats of the oblique pulling structure in the core strip unit is adjusted according to the processing technology and the practical application of the board. The slats in a same oblique pulling structure may be parallel to each other, and the spacing between adjacent slats may not be fixed. Inclination directions and angles of the slats in the same layer of the oblique pulling structure with respect to the surface of the board core may be the same or different. Preferably, the slanting angle of the slats in the same layer of the oblique pulling structure with respect to the surface of the board core is the same, preferably 45 degrees. Preferably, the slat spacing of the horizontal pressure-bearing body is smaller than the slat spacing of the oblique pulling structure, which is conducive to increasing the bonding area and improving the stability of the board core.

Regardless of whether the inclination directions of the slats in the same layer of the oblique pulling structure are the same or opposite, the embodiment falls within the protection scope of the present application, as long as the slats of the oblique pulling structure are obliquely arranged at intervals with respect to the horizontal pressure-bearing body.

Further, in order to achieve a better mechanics effect, in a specific embodiment, the horizontal pressure-bearing body in the core strip unit has a same width along the lamination direction as the oblique pulling structure in the core strip unit. Preferably, the horizontal pressure-bearing body and the oblique pulling structure have a same width along the lamination direction.

Each group of the core strip unit according to the present application includes two adjacent oblique pulling structures. In a specific embodiment, due to the difference in the spacing, inclination directions and angles of slats in the oblique pulling structure, a projection of the slats at corresponding positions of two adjacent layers of the oblique pulling structures is in a herringbone shape or a splay shape or a cross shape in the lamination direction, as shown in Figure 26. Figure 26 shows projections of the slats of two adjacent layers of oblique pulling structures along the lamination direction, wherein Figure 26a is a herringbone shape, Figure 26b is a cross shape, and Figure 26c is a splay shape.

It should be noted that, the inclination directions and distribution manners of the slats of the two adjacent layers of the oblique pulling structures in each group of the core strip unit in the board core may not be constant.

In a specific embodiment, a fireproof material used for retarding inflaming may be sprayed on surfaces of the horizontal pressure-bearing body, the first reinforcing rib, the second reinforcing rib, the third reinforcing rib, and the oblique pulling structure in the core strip unit, and/or is filled in intervals among the horizontal pressure-bearing body, the first reinforcing rib, the second reinforcing rib, the third reinforcing rib, and the oblique pulling structure.

### Seventh embodiment:

A method for manufacturing a board core of an artificial board is further provided according to the present application. The board core includes multiple groups of core strip units. Each of the core strip units has a multi-layer structure along a length direction of the board core. Each group of the core strip unit includes a horizontal pressure-bearing body extending in the length direction of the board core, and an oblique pulling structure obliquely arranged with respect to the horizontal pressure-bearing body. Each group of the core strip unit is composed of the horizontal pressure-bearing body, another horizontal pressure-bearing body, the oblique pulling structure and another oblique pulling structure laminated and bonded in sequence along the length direction of the board core. The core strip units are laminated and bonded in sequence along the length direction of the board core to form the board core. Specific steps are as follows:
Step a2: placing multiple slats with a same length and a same thickness in parallel with each other according to the fiber grain, and seamlessly placing the slats in a horizontal direction to form a square flat board (11);
   Figure 27 shows a schematic plan view of a surface of the board (11) and a side view of the board in a direction D. It should be noted that, there is no requirement for the width of each slat in specific embodiments, and preferably the slats have the same width. The length and thickness of the slats are selected according to the conditions of the raw materials and the application of the board. The slats are packed tightly and seamlessly, as shown in Figure 27.
Step b2: stacking two identical boards (11) into a square flat board (12) with directions of the fiber grain of the two boards being the same;
   Figure 28 shows a schematic plan view of a surface of the board (2) and a side view of the board in the direction D as shown in Figure 27. Multiple slats having the same length and the same thickness are seamlessly placed on the board (11). There is no requirement for the width of each slat in specific embodiments, and preferably the slats have the same width. The length and thickness of the slats are selected according to the conditions of the raw materials and the application of the board. It should be noted that, in order to save wood, the length of each slat in the board (2) is preferably the same as the length of the slat in the board (11), while the thickness and width thereof may be the same as or different from those of the slat in the board (11). After the slats are arranged in place, the slats are bonded to the flat board (11) to form the board (12).
Step c2: opening multiple grooves which are in parallel with the fiber grain of the square flat board (12) on two surfaces of the board (12) along the fiber grain of the board to form a board (13);

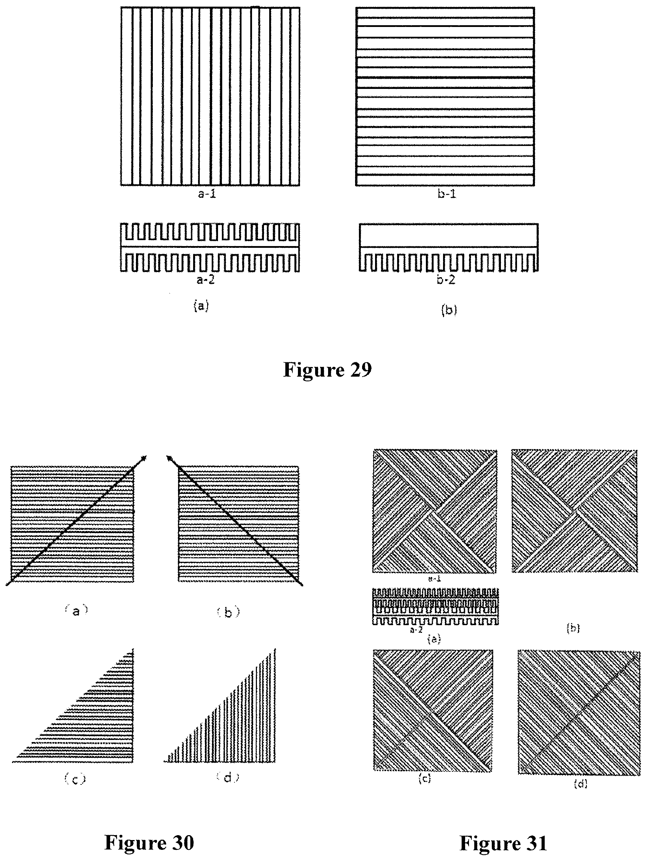

   Figure 29a shows a schematic plan view (Figure 29a-1) of a surface of the board (13) and a side view (Figure 29a-2) of the board in the direction D as shown in Figure 27. The board (13) is formed by grooving on two surfaces of the board (12) along the fiber grain, wherein a direction of the grooves is parallel to the fiber grain. The depth and width of the grooves and the number of the grooves are determined according to the application and the strength requirements of the board core. Preferably, the depth of each of the grooves on the board (13) is equal to the thickness of the corresponding slat, as shown in Figure 29a-2.
Step d2: placing multiple slats with a same length and a same thickness in parallel with each other according to the fiber grain, and seamlessly placing the slats in a horizontal direction to form a square flat board (11); stacking two identical boards (11) into a square flat board with directions of the fiber grain of the two boards perpendicular to each other; and opening multiple grooves which are in parallel with the fiber grain of the square flat board on two surfaces of the square flat board along the fiber grain of the square flat board to form a board (14), wherein a diagonal length of the board (14) is less than or equal to side lengths of the flat board (11), the flat board (12) and the board (13);
   Figure 29b is a structural view of the board (14). It should be noted that, the depth, width, and number of the grooves in the board (14) may be the same as those of the board (13), or may be completely different from those of the board (13), as long as the diagonal length of the board (14) is less than or equal to that of the board (13). The board (14) and the board (13) are manufactured in a same way. Preferably, a depth of each of the grooves on the board (14) is smaller than or equal to a thickness of the corresponding slat.
Step e2: cutting the board (14) in a diagonal direction of 45 degrees to form two triangular boards (15);
   Figures 30(a) and 30(b) are schematic views of cutting directions of the board (14). There are two ways to cut the same board (14) in the diagonal direction of 45 degrees, and the formed board (15) also has two structural forms, as shown in Figures30(c) and 30(d). It should be noted that, both cutting directions are applicable to the method for manufacturing the board core according to the present application, and fall within the protection scope of the present application.
Step f2: placing four boards (15) on the board (13) with hypotenuses of the four boards (15) coinciding with edges of the board (13), and bonding the four boards to the board (13) to form a board (16), wherein the board (16) is the core strip unit;

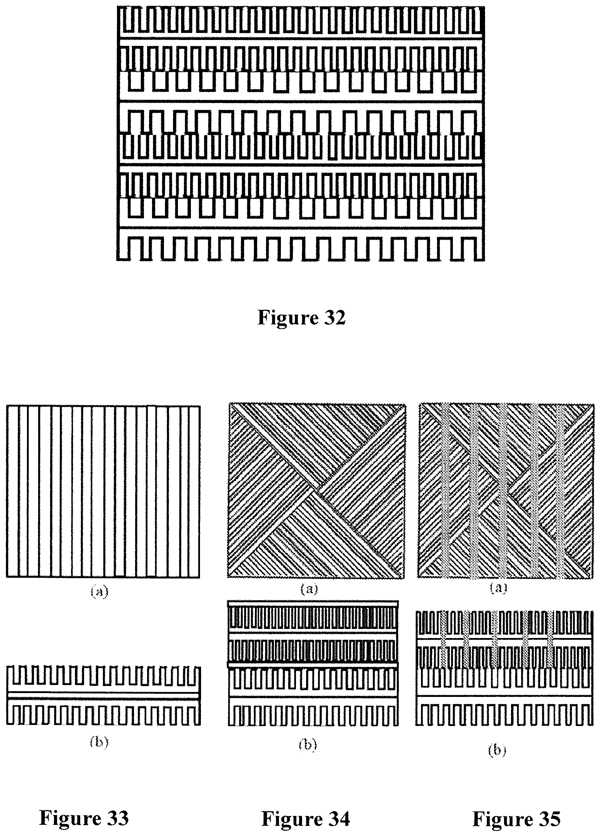

   Figure 31 is a schematic view of the board (16). Since the board (15) of two structures is formed by cutting the board (14) in different ways, different cutting methods and different selection of the board (15) lead to four variants of the structure of the board (16). The formed board (16) has a structure as shown in Figures 31(a) and 32(b), if four boards (15) formed by cutting two boards (14) in a same direction are adopted, wherein a-1 in Figure 31a is a plan view, and a-2 is a side view; and the formed board (16) has a structure as shown in Figures 31(c) and 31(d), if four boards (15) formed by cutting two boards (14) in two different directions are adopted. It should be noted that, if the hypotenuse of the board (15), that is, the diagonal length of the board (14) is shorter than the side length of the board (13), the hypotenuse of the board (15) coincides with an edge of the board (13), in this case, there may be a gap in a center of the board. However, the gap does not affect the manufacture of the board core according to the present application.
Step g2: laminating and bonding the multiple groups of the boards (16) in a certain sequence to form the board core of the artificial board, as shown in Figure 32;
   It should be noted that, the board (16) shown in Figure 32 only includes one group of four-layer structure, that is, a group of core strip unit. In practical applications, multiple boards (16) may be combined according to requirements for the length and width of the board core to form a board (17) having multiple groups of core strip units as shown in Figure 32, and then the board is cut into board cores of the artificial board according to a certain thickness in the width direction of the board core.

The core strip units prepared according to the above steps are laminated and bonded in sequence along the length or width direction of the board core, thereby forming the board core of the artificial board having a certain length and width.

It should be noted that the orientation terms used in the manufacturing process of the present application refers to Figure 32 as a reference, The orientation terms "upper" and "lower" refer to Figure 32 as the reference, and the up-down direction refers to a direction perpendicular to the board surface. It should be understood that these orientation terms are described with the drawings of the specification as reference, and these terms should not affect the protection scope of the present application.

In a specific embodiment, the side length of the board (13) is 1.2m, and the side length of the board (14) is 0.85m.

In a specific embodiment, if the strength of the board core needs to be further increased, a first reinforcing rib may be inserted between two boards (11), and the manufacturing method further includes step h2: inserting, after the step a2 and before the step b2, a first reinforcing rib, wherein it is required that the fiber grain of an outermost layer of thin board of the first reinforcing rib is perpendicular to the board (11). The first reinforcing rib may include multiple layers of thin board, and a thickness of the reinforcing rib is achieved by increasing or decreasing the number and thickness of the thin board as required. Referring to Figure 33, Figure 33a is a plan view, and Figure 33b is a side view. It can be seen from Figure 33 (Figure 33b) that there is the first reinforcing rib at a connection of tail ends of two horizontal pressure-bearing bodies.

In a specific embodiment, if the strength of the board core needs to be further increased, the method may further include step i2: inserting, after the step c2 and before the step d2, a second reinforcing rib, wherein the second reinforcing rib may include multiple layers of thin board, and the thickness of the reinforcing rib is achieved by increasing or decreasing the number and thickness of the thin board as required. Referring to Figure 34, it can be seen from Figure 34b that there is the second reinforcing rib at a connection of the horizontal pressure-bearing body and the oblique pulling structure.

In a specific embodiment, if the strength of the board core needs to be further increased, the method further includes step j2: inserting, after the step f2 and before the step g2, a third reinforcing rib, wherein a specific process is as follows: opening grooves at different positions on a surface (a plane on which the oblique pulling structure is located) of the board (16) along the length or width direction of the board core, and filling corresponding slats in the grooves to form multiple third reinforcing ribs, as shown in Figure 35, wherein a depth of each groove is less than or equal to the thickness of the board (14), and Figure 35 shows a schematic plan view (35a) of the board (16) and a side view (35b) of the board in the direction D shown in Figure 27. The plan view in Figure 35 shows that the surface of the oblique pulling structure of the board (16) is grooved at different positions above, and the slats are filled in the grooves to form the third reinforcing rib. The side view in Figure 35 shows that a depth of the groove is equal to a thickness of the board (14).

In a specific embodiment, in order to increase the strength of the board core, the first reinforcing rib is inserted in a middle of the tail end of the dual-horizontal pressure-bearing body. The specific method is as follows:
Step a3: placing multiple slats with a same length and a same thickness into a rectangular board according to the fiber grain, wherein a length of a long side of the rectangular board is equal to the length of the first reinforcing rib, which ensures that the first reinforcing rib is an uninterrupted reinforcing rib along the length direction, and the length may be, for example, 2.4m; and then placing multiple slats with a same length and a same thickness in parallel with each other according to the fiber grain, and seamlessly placing the slats in a horizontal direction to form a square flat board (11);
Step b3: placing multiple boards (11) from two sides of the rectangular board with the fiber grain of the board (11) being perpendicular to the fiber grain of the rectangular board, until the boards (11) are tiled on the two sides of the rectangular board, and bonding the boards to the rectangular board.
Step c3: opening, after bonding, multiple grooves which are in parallel with the fiber grain of the slats on two surfaces of the board along the fiber grain of the slats to form the dual-horizontal pressure-bearing body having the complete first reinforcing rib.

It should be noted that, in the above manufacturing method, the lengths, widths, and thicknesses of the slats and the boards are selected according to the size and the application of the board core. Dimensions of the slats and the boards do not limit the technical solution of the present application.

Specifically, it should be noted that, the drawings of all embodiments of the present application are only for illustrating the structure of the present application. The plan views, front views, side views of the drawings are only schematic views, those views may be views viewed from an oblique angle, and may not be the plan views or front views viewed from a vertical direction or a horizontal direction.

A series of detailed descriptions above-mentioned are just for illustrating the applicable embodiments of the present application, and are not intend to limit the scope of protection of the present application. Any equivalent embodiments or modifications without departing from the skill and spirit of the present application, for example, the combination, division or duplication of features fall within the scope of protection of the present application.

## Claims

1. A board core of an artificial board, comprising a plurality of groups of core strip units, wherein each of the core strip units has a multi-layer structure along a length direction of the board core, each group of the core strip unit comprises a vertical pressure-bearing body extending in a thickness direction of the board core, a horizontal pressure-bearing body extending in the length direction of the board core, and an oblique pulling structure obliquely arranged with respect to the horizontal pressure-bearing body and the vertical pressure-bearing body, each group of the core strip unit is composed of the horizontal pressure-bearing body, the vertical pressure-bearing body, the oblique pulling structure, another oblique pulling structure, another vertical pressure-bearing body, another horizontal pressure-bearing body, another oblique pulling structure and yet another oblique pulling structure laminated and bonded in sequence along the length direction of the board core, and the core strip units are laminated and bonded in sequence along the length direction of the board core to form the board core.

2. The board core according to claim 1, wherein the vertical pressure-bearing body comprises a plurality of slats which extend along the thickness direction of the board core and are arranged at intervals in parallel with each other; the horizontal pressure-bearing body comprises a plurality of slats which extend along the length direction of the board core and are arranged at intervals in parallel with each other; the oblique pulling structure comprises a plurality of slats which are obliquely arranged with respect to the horizontal pressure-bearing body and the vertical pressure-bearing body and are arranged at intervals; and a projection of the slats at corresponding positions of two adjacent layers of the oblique pulling structures in the core strip unit is in a herringbone shape or a splay shape or a cross shape in a lamination direction of the multi-layer structure.

3. The board core according to claim 2, wherein a bonding point of the slat of the vertical pressure-bearing body at a bonding position between the vertical pressure-bearing body and the horizontal pressure-bearing body is a slope-shaped structure.

4. The board core according to claim 2, wherein one layer of the horizontal pressure-bearing body at a boundary of the board core is removed according to requirements for insertion, so that the boundary of the board core is the vertical pressure-bearing body capable of insertion.

5. The board core according to claim 1, wherein the board core further comprises a reinforcing rib structure in a length or width direction of the artificial board.

6. The board core according to any one of claims 1 to 5, wherein a fireproof material used for retarding inflaming is sprayed on surfaces of the horizontal pressure-bearing body, the vertical pressure-bearing body and the oblique pulling structure in the core strip unit, and/or is filled in intervals among the horizontal pressure-bearing body, the vertical pressure-bearing body and the oblique pulling structure.

7. A method for manufacturing a board core of an artificial board, comprising:
step a1, placing a plurality of slats with a same length and a same thickness in parallel with each other according to fiber grain, and seamlessly placing the slats in a horizontal direction to form a square flat board (1);
step b1: placing a plurality of slats having a same length and a same thickness on the flat board (1) with the fiber grain of the slats perpendicular to the fiber grain of the flat board (1) in a same way as in step a1, and bonding the slats to the flat board (1) to form a square flat board (2);
step c1: opening a plurality of grooves which are in parallel with the fiber grain of the slats on two surfaces of the flat board (2) along the fiber grain of the slats to form a board (3);
step d1: forming a board (4) according to steps a1 to c1, wherein a diagonal length of the board (4) is less than or equal to side lengths of the flat board (1), the flat board (2) and the board (3);
step e1: cutting the board (4) in a diagonal direction of 45 degrees to form two triangular boards (5);
step f1: placing four boards (5) on the board (3) with hypotenuses of the four boards (5) coinciding with edges of the board (3), and bonding the four boards to the board (3) to form a board (6);
step g1: laminating and bonding multiple boards (6) in a certain sequence to form a board (7), and cutting the board (7) according to a certain thickness to form one or more groups of the core strip units; and
step h1: laminating and bonding the multiple groups of the core strip units in sequence to form the board core of the artificial board.

8. The method according to claim 7, wherein a depth of each of the grooves on the board (3) is equal to a thickness of the corresponding slat, and a bottom of the groove is a slope-shaped structure.

9. A board core of an artificial board, comprising a plurality of groups of core strip units, each of the core strip units has a multi-layer structure along a length direction of the board core, each group of the core strip unit comprises a dual-horizontal pressure-bearing body extending in the length direction of the board core, and an oblique pulling structure obliquely arranged with respect to the dual-horizontal pressure-bearing body in the length direction of the board core, and each group of the core strip unit comprises the dual-horizontal pressure-bearing body, the oblique pulling structure, and another oblique pulling structure in the length direction of the board core, and is formed by laminating and bonding the dual-horizontal pressure-bearing body, the oblique pulling structure, and another oblique pulling structure; The dual-horizontal pressure-bearing body is composed of two horizontal pressure-bearing bodies bonded at tail ends; The core strip units are repeatedly stacked along the length of the board core to form the board core.

10. The board core of the artificial board according to claim 9, wherein a tail end of the dual-horizontal pressure-bearing body is bonded by inserting a first reinforcing rib, and the first reinforcing rib comprises at least one layer of thin board.

11. The board core of the artificial board according to claim 10, wherein fiber grain of an outermost layer of thin board of the first reinforcing rib is perpendicular to the grain of the horizontal pressure-bearing body bonded with the thin board.

12. The board core of the artificial board according to claim 11, wherein in a case that the number of layers of thin board comprised in the first reinforcing rib is odd, the fiber grain of any two adjacent layers of thin board are perpendicular to each other.

13. The board core of the artificial board according to claim 9, wherein the oblique pulling structure and the dual-horizontal pressure-bearing body are bonded by inserting a second reinforcing rib, and the second reinforcing rib comprises at least one layer of thin board.

14. The board core of the artificial board according to claim 9, wherein adjacent oblique pulling structures are grooved at any position to form a groove, a third reinforcing rib is inserted in the groove, and a direction of the third reinforcing rib is parallel or not parallel to the length direction of the board core.

15. The board core of the artificial board according to claim 9, wherein the horizontal pressure-bearing body comprises a plurality of slats which extend along the length direction of the board core and are arranged at intervals and in parallel with each other; the oblique pulling structure comprises a plurality of slats which are obliquely arranged with respect to the horizontal pressure-bearing body and are arranged at intervals; and a projection of the slats at corresponding positions of two adjacent layers of the oblique pulling structures in the core strip unit is in a herringbone shape or a splay shape or a cross shape in a lamination direction of the multi-layer structure.

16. The board core of the artificial board according to claim 15, wherein a depth between the slats of the horizontal pressure-bearing body arranged at intervals is smaller than a thickness of the horizontal pressure-bearing body, and a depth between the slats of the oblique pulling structure arranged at intervals is smaller than a thickness of the oblique pulling structure.
